# EUROPÄISCHE PATENTSCHRIFT

(11) **EP 3 883 767 B1**
(45) Veröffentlichungstag und Bekanntmachung des Hinweises auf die Patenterteilung: **10.12.2025**
(21) Anmeldenummer: 19801838.4
(22) Anmeldetag: 08.11.2019
(51) Int. Cl.: B32B 5/28, B32B 5/26, B32B 5/08, B29C 70/22, B29C 70/08, B32B 3/04, B32B 5/02, B32B 27/12, B32B 27/18, B32B 27/20, B32B 27/32, B29K 23/00, B29K 311/10, B29K 309/08, B29K 105/26, B29K 105/08

(54) **MULTIMATERIELLES HALBZEUG FÜR TRAGENDE STRUKTURBAUTEILE**
MULTI-MATERIAL SEMIFINISHED PRODUCT FOR LOAD-BEARING STRUCTURAL COMPONENTS
PRODUIT SEMI-FINI MULTIMATÉRIAU POUR COMPOSANTS STRUCTURELS PORTEURS

(30) Priorität: 19.11.2018 DE 102018129065
(43) Veröffentlichungstag der Anmeldung: 29.09.2021
(73) Patentinhaber: VOLKSWAGEN AG, 38440 Wolfsburg (DE)
(72) Erfinder: LAHL, Benedikt, 31224 Peine (DE); EDRES, Hans-Josef, 30890 Barsinghausen (DE)
(74) Vertreter: Gulde & Partner
(86) Internationale Anmeldenummer: PCT/EP2019/080707
(87) Internationale Veröffentlichungsnummer: WO 2020/104218

(56) Entgegenhaltungen:
- CH-A- 207 481
- DE-A1- 102012 105 500
- DE-U1- 202017 004 083
- US-A- 5 480 706

## Beschreibung

Die Erfindung betrifft ein multimaterielles Halbzeug für tragende Strukturbauteile, insbesondere für die Verwendung in der Kraftfahrzeugindustrie.

Im Kraftfahrzeugbau ist der Trend hin zu Leichtbaukonzepten ungebrochen. Auch über den Kraftfahrzeugbau hinaus besteht ein hohes Interesse daran, möglichst leichte Bauteile beziehungsweise Komponenten zu fertigen, sodass das finale Produkt entsprechend ein geringes Gesamtgewicht aufweist. Neben einem günstigeren Kraftstoffverbrauch im Kraftfahrzeugbau können zudem zusätzliche Nutzen von Leichtbaukonzepten eine Rolle spielen. So kann mit bestimmten Leichtbaukonzepten auch eine Substitution von anderen Werkstoffen einhergehen, sodass damit verbunden auch eine erhöhte Designfreiheit bezüglich des finalen Produkts aber auch der damit verbundenen Produktionsprozesse einhergeht. So führen beispielsweise metallische Werkstoffe zu schweren Bauteilstrukturen in Kraftfahrzeugen, welche mit einem hohen Energie- beziehungsweise hohem Kraftstoffverbrauch verbunden sind. Die EU-Vorgaben (EU = Europäische Union) Nr. 443/2009 und Nr. 333/2014 zur CO₂-Reduzierung bei Kraftfahrzeugen führen zur Forderung nach gewichtsoptimierten Fahrzeugkomponenten.

Naturfaserverstärkte Kunststoffe (NFK) bieten infolge der geringen Dichte und der hohen gewichtsbezogenen Eigenschaften ein hohes Leichtbaupotential. Die derzeitigen naturfaserverstärkten Bauteilstrukturen in Kraftfahrzeugen bestehen häufig aus einem naturfaserverstärkten Thermoplast (NFT). Die Naturfasern werden mittels synthetischen Polypropylenfasern zu einem Faservlies verarbeitet, wodurch dieses anschließend mittels Temperatureintrag zu einem dreidimensionalen Bauteil verpresst wird. Die Bauteileigenschaften der verpressten Naturfaservliese sind für lasttragende Strukturen nicht ausreichend, sodass die Bauteilanwendungen bisher auf Interieur-Verkleidungsteile begrenzt sind. Eine Anwendung von naturfaserverstärkten Thermoplasten für lasttragende Bauteilstrukturen ist nicht bekannt.

Die heute sich auf dem Markt befindenden lasttragenden Strukturbauteile basieren auf thermoplastischen Halbzeugen, welche als Organobleche bezeichnet werden. Aufgrund des hohen Eigenschaftsprofils lassen sich metallische Werkstoffstrukturen ersetzen und das Fahrzeuggewicht reduzieren. Die Organobleche bestehen aus einem petrochemischen thermoplastischen Kunststoff (zum Beispiel Polypropylen oder Polyamid) sowie aus einer oder mehreren Lagen eines synthetischen Glas-, Kohlenstoff- oder Aramidfasergewebes. Die längenunbegrenzten Verstärkungsfasern bewirken innerhalb des Faserverbundkunststoffes hohe mechanische Eigenschaften, welche sich durch hohe Festig- und Steifig- sowie Schlagzähigkeiten darstellen.

Der Einsatz von synthetischen Glas-, Kohle- oder Aramidfasern erfordert einen hohen Energieeinsatz und führt zu bedeutenden CO₂-Emissionen während der Produktion. Zudem ist die Materialdichte bei den synthetischen Verstärkungsfasern gegenüber den Naturfasern größer, wodurch sich ein geringeres Leichtbaupotential und infolgedessen ein höheres Bauteilgewicht gegenüber den naturfaserverstärkten Organoblechen einstellt.

Des Weiteren besteht bei den derzeitigen Organoblechen die Polymermatrix aus einem petrochemischen Thermoplast, sodass sich dieses aus ökologischer Sicht und hinsichtlich eines stofflichen Recyclings nach der EU-Altfahrzeugrichtlinie 2000/53/EG als negativ darstellt. Der Einsatz von recycelten Kunststoffen (=Rezyklate) als Matrixpolymer ist hingegen als positiver zu bewerten.

Aus dem Stand der Technik sind verschiedene Ansätze als bekannt zu entnehmen, welche zumindest in Teilbereichen die Idee von Organoblechen oder technisch ähnlichen Konzepten aufgreifen. Gängige öffentlich bekannte Lösungen beziehungsweise handelsverfügbare Organobleche bestehen aus einem reinen Glas- oder Naturfasergewebe sowie aus einer unverstärkten petrochemischen Polymermatrix ohne Einsatz von PP-Rezyklaten (=Polypropylen -Rezyklaten).

So ist aus der Druckschrift DE 198 15 783 A1 ein faserverstärkter Kunststoffformkörper als bekannt zu entnehmen. Es wird in diesem Dokument vorgeschlagen, dass Formkörper durch Naturfasern unidirektional verstärkt werden und dass die Naturfasern parallelisierte Fasern in Strang- oder Bänderform sind. Somit können faserverstärkte Kunststoffformkörper unter Verwendung von endlich langen Naturfasern hergestellt werden, welche sehr hohe Festigkeiten und Steifigkeiten sowie eine weitestgehend homogene Faserverteilung aufweisen und somit für hochwertige Anwendungen geeignet sind. Nicht offenbart wird hingegen, dass eine Gewebestruktur vorgesehen ist, welche aus einer Kombination aus Kunstfasern und Naturfasern hergestellt ist.

Aus der Druckschrift DE 10 2013 017 955 A1 ist zudem ein Kraftfahrzeug mit einem Bodenelement als bekannt zu entnehmen. Das Bodenelement weist mindestens ein Deckelement auf, wobei mit dem Deckelement eine Versteifungsstruktur verbunden ist. Das Deckelement ist dabei aus einem Faserverbundmaterial gebildet und die Versteifungsstruktur ist als Wabenkern oder als Schaumkern ausgebildet. Das Deckelement kann Glasfasern und Naturfasern aufweisen und als Matrixmaterial Polypropylen umfassen. Nicht offenbart wird hingegen, dass eine Gewebestruktur vorgesehen ist, welche aus einer Kombination aus Kunstfasern und Naturfasern hergestellt ist, wobei eine Naturfaser jeweils zwischen zumindest zwei Kunstfasern angeordnet ist.

Aus der Druckschrift DE 10 2014 221 165 A1 ist zudem ein Verfahren zum Herstellen eines Hybrid-Verbundbauteils aus Organoblechen und einem metallischen Verstärkungselement als bekannt zu entnehmen. Im Fokus steht dabei die Art und Weise wie die einzelnen Organobleche mit dem metallischen Verstärkungselement verbunden werden, wobei das Einspritzen eines thermoplastischen Kunststoffmaterials vorgesehen ist. Nicht offenbart wird hingegen, dass eine Gewebestruktur vorgesehen ist, welche aus einer Kombination aus Kunstfasern und Naturfasern hergestellt ist, wobei eine Naturfaser jeweils zwischen zumindest zwei Kunstfasern angeordnet ist.

DE 10 2012 105 500 A1 offenbart ein Faserverbundbauteil und ein Verfahren zur Herstellung hierfür. Dieses Faserverbundbauteil besteht aus einem Faserhalbzeug und einer Matrix, wobei dieses Faserverbundbauteil zumindest teilweise auf Polymerfasern, insbesondere bio-basierten Fasern beruht. Hierbei kann ein erstes Faserhalbzeug aus Kunststofffasern und mindestens ein Faserhalbzeug aus einem Mischgewebe aus Kunststofffasern und Kohle- oder Glasfasern bestehen. Das Mischgewebe kann aus bio-basierten Fasern bestehen. Weitere multimaterielle Halbzeuge sind in der Druckschrift DE 20 2017 004083 U1 offenbart.

Der Erfindung liegt nun die Aufgabe zugrunde, ein Halbzeug für tragende Strukturbauteile, insbesondere für die Verwendung in der Kraftfahrzeugindustrie bereitzustellen, welches ein verbessertes Leichtbaupotential gegenüber konventionellen Halbzeugen für tragende Strukturbauteile aufweist und welches aus ökologischer Sicht ein verbessertes Potential gegenüber konventionellen Halbzeugen für tragende Strukturbauteile aufweist.

Erfindungsgemäß ist vorgesehen, dass ein multimaterielles Halbzeug für tragende Strukturbauteile, insbesondere für die Verwendung in der Kraftfahrzeugindustrie, bereitgestellt wird. So ein Halbzeug umfasst dabei zumindest eine Gewebestruktur und eine die Gewebestruktur umgebende Kunststoffmatrix, wobei die Gewebestruktur aus einer Kombination aus Kunstfasern und Naturfasern hergestellt ist, wobei eine Naturfaser jeweils zwischen zumindest zwei Kunstfasern angeordnet ist. Durch die Kombination aus Natur- und Kunstfasern werden die geringer belastbaren Naturfasern durch die lasttragenden Glasfasern geschützt, wodurch ein vorzeitiges Bauteilversagen vermieden wird und somit die Naturfaserwerkstoffe für lasttragende beziehungsweise crashrelevante Bauteilstrukturen eingesetzt werden können. Wenn die Naturfasern mittig zwischen den beiden Kunstfasern angeordnet werden, können auftretende Kräfte im Verbund über die beiden äußeren Kunstfasern abgeleitet werden. Es lässt sich somit ein besonders stabiles Halbzeug bereitstellen, sodass dieses Halbzeug für tragende Strukturbauteile, insbesondere in der Kraftfahrzeugindustrie, geeignet ist. Auf diese Weise lässt sich nicht nur ein verbessertes Leichtbaupotential aufgrund des Einsatzes von leichten Werkstoffen erreichen, sondern es lässt sich zudem aus ökologischer Sicht ein verbessertes Potential erreichen, da unter anderem beispielsweise nachwachsende Rohstoffe zum Einsatz kommen. Es können beispielsweise mehrere Gewebestrukturen vorgesehen sein, welche dann insgesamt in der Kunststoffmatrix eingebettet sind. So ein Verbund von Gewebestruktur und Matrix kann auch als Hybridverbund bezeichnet werden. Die Gewebestruktur kann auch als Hybridgewebelage bezeichnet werden. Generell führt die beschriebene Kombination verschiedener Materialkomponenten zu einer optimalen ökologischen, ökonomischen und technischen Bauteilperformance. Bei den naturfaserverstärkten Organoblechen beziehungsweise Halbzeugen wird durch die miteinander verwebten Natur- und Kunstfasern, beispielsweise Glasfasern, bei nahezu gleichbleibenden mechanischen Halbzeugeigenschaften gegenüber reinen glasfaserverstärkten Organoblechen, der Sprödbruch reduziert und es ergeben sich belastbare sowie crashoptimierte Bauteilstrukturen. Die kostengünstigen Natur- und Kunststofffasern, beispielsweise Glasfasern, können auf industriellen Webmaschinen zu längenunbegrenzten Geweben verwebt und mittels Film-Stacking- oder Schmelze-Direkt-Verfahren in großer Stückzahl zu Halbzeugen weiterverarbeitet werden. Die teilweise Substitution von Kunststofffasern, beispielsweise von Glasfasern mit einer Dichte von 2,55 g/cm³ durch Naturfasern mit einer maximalen Dichte von 1,45 g/cm³ bewirkt, dass sich bei den entwickelten Hybridgeweben beziehungsweise bei den naturfaserverstärkten Organoblechen eine Gewichtsersparnis von bis zu 20 bis 30 Gew.-% gegenüber einem reinen glasfaserverstärkten Organoblech ergibt. Hierdurch werden während der Nutzungsphase durch die Gewichtsreduzierung als auch bei der Halbzeugherstellung CO₂-Emissionen vermieden.

Zudem ist erfindungsgemäß vorgesehen, dass die Gewebestruktur zumindest teilweise auf einer bidirektionalen Gewebestruktur mit einer 3/3 Panamabindung basiert. Die zuvor genannten Vorteile lassen sich somit noch besser erreichen.

Auch ist erfindungsgemäß vorgesehen, dass in der bidirektionalen Gewebestruktur orthogonal zueinander gekreuzte Kettfäden und Schussfäden liegen, wobei die Naturfasern als ineinander verdrehtes Stapelgarn jeweils mittig zwischen außenliegenden Glasfaserfilamenten angeordnet sind. Die zuvor genannten Vorteile lassen sich somit noch besser erreichen.

Weitere bevorzugte Ausgestaltungen der Erfindung ergeben sich aus den übrigen, in den Unteransprüchen genannten Merkmalen.

Es ist in einer bevorzugten Ausgestaltung der Erfindung vorgesehen, dass die Kunststoffmatrix zumindest ein niederviskoses thermoplastisches Material umfasst. Das vorgestellte Halbzeug beziehungsweise naturfaserverstärkte Organoblech kann als gewebeverstärkter Hybridverbund angesehen werden, welcher aus einer Kombination von Natur- und Kunstfasern, beispielsweise Glasfasern, sowie einer umgebenden niederviskosen thermoplastischen Kunststoffmatrix besteht. Die zuvor genannten Vorteile lassen sich somit noch besser erreichen.

Auch ist in einer bevorzugten Ausgestaltung der Erfindung vorgesehen, dass die Kunststoffmatrix zumindest ein Polypropylen, insbesondere ein niedrigschmelzendes Polypropylen, umfasst. Infolge der geringen thermischen Stabilität der Naturfasern (< 200 °C) eignen sich insbesondere niedrigschmelzende Polypropylene. Somit kann sichergestellt werden, dass das Halbzeug stabil und zuverlässig für den gedachten Einsatz ausgelegt ist.

Ferner ist in einer bevorzugten Ausgestaltung der Erfindung vorgesehen, dass das zumindest eine Polypropylen ein unverstärktes, ein glasverstärktes oder ein talkumverstärktes Polypropylen ist. Insbesondere ein glasverstärktes oder ein talkumverstärktes Polypropylen kann als Matrixpolymer eingesetzt werden, sodass eine auftretende Faseranisotropie reduziert wird. Somit wird ein stabiles Halbzeug für den Einsatz im Leichtbau ermöglicht, wobei insbesondere der Einsatz von nachwachsenden Rohstoffen in Form von Naturfasern ermöglicht wird. Bei der Verwendung eines glasfaserverstärkten Polypropylens (PP/ GF) wird zudem die Faseranisotropie reduziert, da sich die Kurzglasfasern aus der Polymermatrix im Bereich der Fadenondulation beziehungsweise -anhebung des Verstärkungsgewebes befinden. Es können beispielsweise hierbei glasfaserverstärkte Polypropylene im Anteil von 0,1 bis 35 Gew.-% der niederviskosen Polypropylen-Matrix zugeführt werden, ohne eine signifikante Steigerung der Polymerviskosität zu erwarten. Die Schubspannungen verteilen sich während der Bauteilbelastung gleichmäßig auf das gesamte Flächengewebe beziehungsweise auf das naturfaserverstärkte Organoblech, wodurch eine vorzeitige Rissbildung sowie ein Bauteilversagen reduziert wird und die mechanischen Verbundeigenschaften ähnlich einem reinen glasfaserverstärkten Organoblech sind. Des Weiteren wird das beispielsweise ineinander verdrehte Naturfasergarn beziehungsweise die Naturfasern durch die Kurzglasfasern innerhalb des Matrixpolymers verstärkt, sodass die einzelnen Naturfasern die Schubspannungen besser absorbieren und die mechanischen Eigenschaften an sich ansteigen. Anstelle der Kurzglasfasern könnte auch ein talkumverstärktes Polypropylen die Faseranisotropie reduzieren. Mit anderen Worten bewirkt der Einsatz von glas- oder talkumverstärkten Polypropylen als Matrixpolymer grundlegend eine Reduzierung der Anisotropie im Faserverbundsystem. Der Effekt ist insbesondere bei naturfaserverstärkten Organoblechen infolge der Naturfaserbeschaffenheit stärker ausgeprägt. Die Anisotropie ergibt sich durch die Fadenanhebung beziehungsweise -ondulation innerhalb der Gewebestruktur und bewirkt richtungsunabhängige Verbundeigenschaften beispielsweise in 0°- und 90°-Richtung des Verstärkungsgewebes.

Zudem ist in einer bevorzugten Ausgestaltung der Erfindung vorgesehen, dass die Kunststoffmatrix zumindest ein recyceltes Polypropylen umfasst, wobei ein Anteil des zumindest einen recycelten Polypropylens 0,1 bis 35 Gew.-% der Kunststoffmatrix beträgt. Der Einsatz von Rezyklaten ist aus ökologischer Sicht als positiv zu bewerten und stellt somit eine Verbesserung gegenüber konventionellen Lösungen dar. Dadurch, dass die Bauteileigenschaften durch das Fasergewebe geprägt sind, können wie gesagt auch recycelte Polypropylene (= PP-Rezyklat) im Anteil von 0,1 bis 35 Gew.-% als Matrixpolymere verwendet werden. Auf diese Weise kann also zumindest teilweise eine Substitution von petrochemischen Polypropylen durch recyceltes PP (= PP-Rezyklat) als Matrixpolymer stattfinden, sodass sich aus Umweltsicht eine Verbesserung gegenüber konventionellen Lösungen einstellt. Vor dem Hintergrund, dass in der EU-Altfahrzeugrichtlinie 2000/53/EG ein stoffliches Recycling seit dem Jahr 2015 von mindestens 85% des durchschnittlichen Fahrzeuggewichts vorgeschrieben ist, stellt sich eine teilweise Substitution von petrochemischen Polypropylen durch recyceltes PP (=Rezyklat) positiv dar.

Auch ist in einer bevorzugten Ausgestaltung der Erfindung vorgesehen, dass die Naturfasern der Gewebestruktur aus Flachsfasern und/oder Jutefasern und/oder Hanffasern ausgewählt sind. Eine nachhaltige Verbesserung lässt sich gegenüber konventionellen Lösungen somit unmittelbar erreichen, da zumindest teilweise ein nachwachsender Rohstoff eingesetzt wird.

Ferner ist in einer bevorzugten Ausgestaltung der Erfindung vorgesehen, dass die Kunstfasern der Gewebestruktur Glasfasern sind. Die geringer belastbaren Naturfasern lassen sich somit durch die lasttragenden Glasfasern schützen, wodurch ein vorzeitiges Bauteilversagen vermieden werden kann und die Naturfaserwerkstoffe somit für lasttragende beziehungsweise crashrelevante Bauteilstrukturen eingesetzt werden können.

Schlussendlich ist in einer bevorzugten Ausgestaltung der Erfindung vorgesehen, dass das zumindest eine Polypropylen mittels zumindest eines Additivmaterials in Form von internen Trennmitteln und/oder Gleitmitteln sowie Haftvermittler angepasst ist. Hierdurch wird eine verbesserte Imprägnierung und Verbundhaftung innerhalb des Hybridverbundes erreicht. Zudem wird durch das optimierte niedrigviskose Polypropylen eine thermische Faserschädigung der Naturfasern ausgeschlossen und eine prozesssichere Fertigungstemperatur von 180 bis 190 °C gewährleistet. Das imprägnierte naturfaserverstärkte Organoblech eignet sich für die Weiterverarbeitung durch Spritzgussanlagen, sodass dieses im One-Shot-Prozess umgeformt und mittels Kunststoffversteifungs- und/oder Fügeelementen hinterspritzt werden kann.

Die vorgestellten Halbzeuge beziehungsweise thermoplastischen Halbzeuge beziehungsweise Organobleche aus Hybridgewebe mit Glas- und Naturfaserverstärkung für tragende Strukturbauteile lassen sich vielfältig einsetzen. Beispielsweise kann neben der Kraftfahrzeugindustrie auch eine strukturelle Anwendung im Freizeit- und Motorsport sowie im Luftfahrt- und Eisenbahnbereich vorgesehen sein. In einem Kraftfahrzeug direkt kann beispielsweise eine naturfaserverstärkte Sitzwanne aus thermoplastischen Kunststoffen vorgesehen sein. Allgemein sind Strukturbauteile im Interieur- und Exterieurbereich denkbar. Dies kann beispielsweise als Türinsert, Armauflage, Kartentasche oder Sitzschale realisiert werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische, perspektivische Ansicht eines multimateriellen Halbzeugs;
- Figur 2: eine schematische Draufsicht auf eine Gewebestruktur von einem multimateriellen Halbzeug.

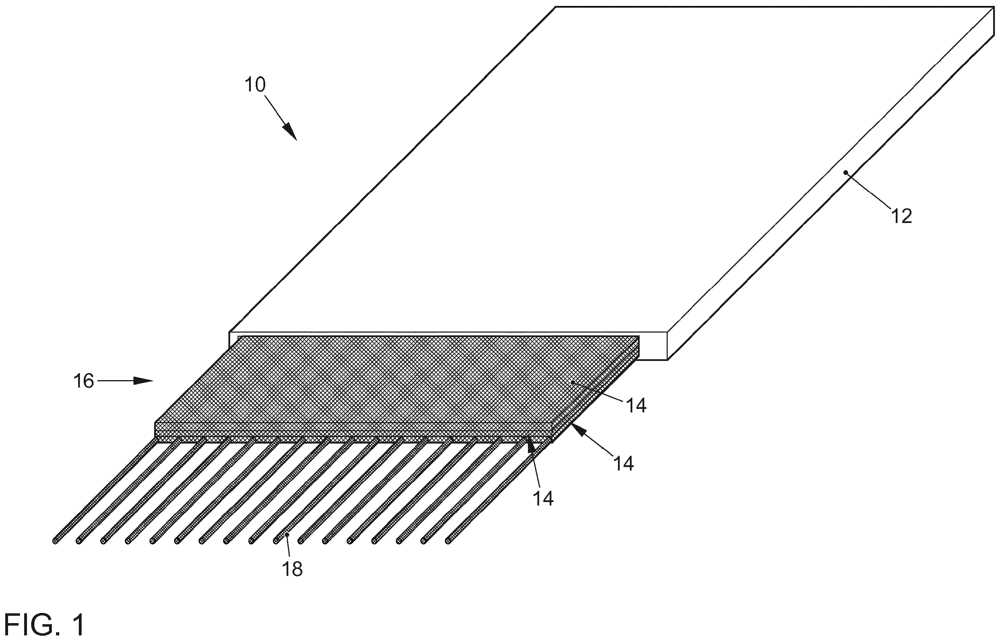

Figur 1 zeigt eine schematische, perspektivische Ansicht eines multimateriellen Halbzeugs 10. So ein Halbzeug 10 kann beispielsweise für ein Strukturbauteil verwendet werden, wie es zum Beispiel in der Kraftfahrzeugindustrie eingesetzt werden kann. Dieses Halbzeug 10 weist eine Kunststoffmatrix 12 auf, welche beispielsweise eine thermoplastische Matrix sein kann. Diese thermoplastische Matrix kann beispielsweise aus einem einzelnen Polypropylen (PP) oder mehreren verschiedenen Polypropylenen aufgebaut sein. Zudem ist der Einsatz von PP/GF (glasfaserverstärktes Polypropylen), PP/Talkum (talkumverstärktes Polypropylen) oder etwa der Einsatz von PP-Rezyklat denkbar. Diese Kunststoffmatrix 12 ist in der Figur 1 im Wesentlichen als rechteckige Form dargestellt und bezogen auf die Bildebene im vorderen Bereich angeschnitten dargestellt, sodass eine Ansicht in die innere Struktur von dem Halbzeug 10 dargestellt ist. Die Kunststoffmatrix 12 umgibt (mit Ausnahme der angeschnitten Sichtweise) vollständig mehrere Gewebestrukturen 14, welche somit in der inneren Struktur von dem Halbzeug 10 vorgesehen sind. Die Gewebestrukturen 14 können jeweils auch als Textil bezeichnet werden. Die verschiedenen Gewebestrukturen 14 sind dabei übereinander gestapelt. In dem gezeigten Ausführungsbeispiel sind dabei drei Gewebestrukturen 14 übereinandergelegt. Dieser Stapel 16 von Gewebestrukturen 14 wird vollständig von der Kunststoffmatrix 12 umgeben, wobei bezogen auf die Bildebene dieser Stapel 16 im vorderen Bereich aus der Kunststoffmatrix 12 herausragt. Die Anzahl der Gewebestrukturen 14 ist hier nur beispielhaft dargestellt und diese Anzahl kann beliebig variieren. Auch ist denkbar, dass lediglich eine Gewebestruktur 14 vorgesehen wird. Die Gewebestruktur 14 ist ebenfalls im Wesentlichen als rechteckige Form dargestellt. Die gezeigten Formen sind nur beispielhaft dargestellt und es sind jegliche andere Formen vorstellbar. Auch ist es vorstellbar, dass die Kunststoffmatrix 12 die Gewebestruktur 14 nur teilweise beziehungsweise zumindest teilweise umgibt. Die einzelnen Gewebestrukturen 14 sind jeweils aus einzelnen Fasern 18 aufgebaut, wobei im vorderen Bereich beispielhaft siebzehn einzelne Fasern 18 aus der unteren Gewebestruktur 14 von dem Stapel 16 herausragen. Das Verhältnis der siebzehn Fasern 18 bezogen auf die Breite der Gewebestruktur 14 ist in der Figur 1 ebenfalls nur beispielhaft dargestellt und es lassen sich beliebige Verhältnisse der Anzahl der Fasern 18 bezogen auf eine Gesamtbreite der Gewebestruktur 14 vorstellen. Die Fasern 18 sind nicht weiter differenziert dargestellt und können beispielsweise Kunstfasern und Naturfasern sein. Die Naturfasern könnten beispielsweise Flachs- , Jute- oder Hanffasern sein. Die Kunstfasern könnten beispielsweise Glasfasern beziehungsweise Glasfaserfilamente sein. Beispielsweise können dabei jeweilige Naturfasern jeweils von mindestens zwei Kunstfasern umgeben sein. Die Breite der Fasern 18 ist ebenfalls nur beispielhaft angegeben. Es sind jegliche verschiedene Breiten und Längen der verschiedenen Fasern 18 vorstellbar. Beispielsweise könnten die Kunstfasern jeweils doppelt so breit wie die jeweiligen Naturfasern sein. Das Halbzeug 10 kann somit auch als ein naturfaserverstärktes Halbzeug beziehungsweise als ein Organoblech bezeichnet werden. Auch könnte so ein Halbzeug 10 als thermoplastischer Hybridverbund bezeichnet werden.

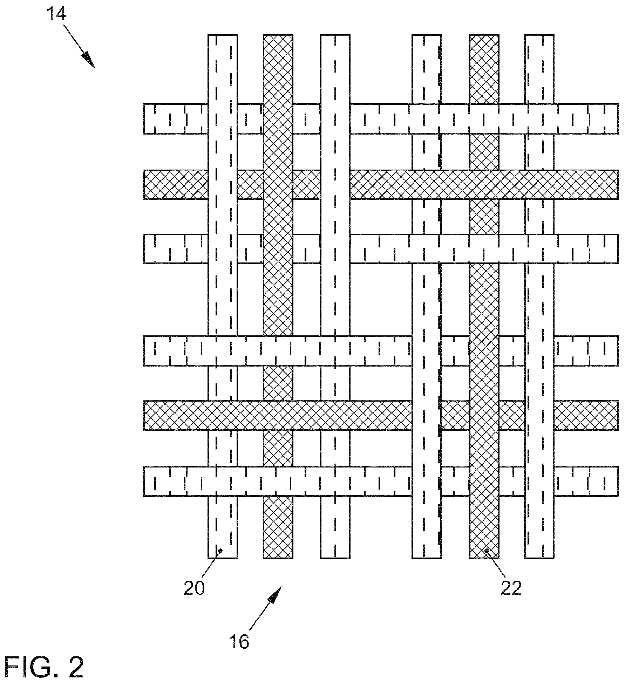

Figur 2 zeigt eine schematische Draufsicht auf eine Gewebestruktur 14 von einem multimaterialen Halbzeug 10. Die einzelnen Fasern 18 sind in der Figur 2 weiter differenziert dargestellt. So sind jeweils Glasfasern 20 beziehungsweise Glasfaserfilamente dargestellt und Naturfasern 22 in Form von Naturfasergarn, welches beispielsweise aus Flachs- , Jute- oder Hanffasern aufgebaut sein kann. Auch Mischformen und alternative Ausgangsmaterialien für die Naturfasern 22 sind vorstellbar. Die Gewebestruktur 14 ist als Hybridgewebe Panama 3/3 dargestellt, wobei jeweilige Naturfasern 22 jeweils von zwei Glasfasern 20 umgeben sind. Die Anordnung der einzelnen Fasern 18 beziehungsweise der Glasfasern 20 und der Naturfasern 22 sind nur beispielhaft dargestellt. Neben der orthogonalen Zuordnung der einzelnen Fasern 18 sind auch andere Zuordnungen oder dem Fachmann geläufige Strukturen vorstellbar, wobei jeweils darauf zu achten ist, dass eine jeweilige Naturfaser 22 auf einer jeweiligen Seite jeweils zumindest eine Glasfaser 20 als unmittelbar benachbarte Faser 18 erhält.

### Bezugszeichenliste

- 10: multimaterielles Halbzeug
- 12: Kunststoffmatrix
- 14: Gewebestruktur
- 16: Stapel
- 18: Faser
- 20: Glasfaser
- 22: Naturfaser

## Patentansprüche

1. Multimaterielles Halbzeug (10) für tragende Strukturbauteile, insbesondere für die Verwendung in der Kraftfahrzeugindustrie, umfassend zumindest eine Gewebestruktur (14) und eine die Gewebestruktur (14) umgebende Kunststoffmatrix (12), wobei die Gewebestruktur (14) aus einer Kombination aus Kunstfasern und Naturfasern (22) hergestellt ist, **dadurch gekennzeichnet, dass** eine Naturfaser (22) jeweils zwischen zumindest zwei Kunstfasern angeordnet ist, wobei die Gewebestruktur (14) zumindest teilweise auf einer bidirektionalen Gewebestruktur mit einer 3/3 Panamabindung basiert und in der bidirektionalen Gewebestruktur orthogonal zueinander gekreuzte Kettfäden und Schussfäden liegen, wobei die Naturfasern (22) als ineinander verdrehtes Stapelgarn jeweils mittig zwischen außenliegenden Glasfaserfilamenten angeordnet sind.

2. Halbzeug (10) nach Anspruch 1, wobei die Kunststoffmatrix (12) zumindest ein niederviskoses thermoplastisches Material umfasst.

3. Halbzeug (10) nach einem der vorherigen Ansprüche, wobei die Kunststoffmatrix (12) zumindest ein Polypropylen, insbesondere ein niedrigschmelzendes Polypropylen, umfasst.

4. Halbzeug (10) nach Anspruch 3, wobei das zumindest eine Polypropylen ein unverstärktes, ein glasverstärktes oder ein talkumverstärktes Polypropylen ist.

5. Halbzeug (10) nach einem der vorherigen Ansprüche, wobei die Kunststoffmatrix (12) zumindest ein recyceltes Polypropylen umfasst, wobei ein Anteil des zumindest einen recycelten Polypropylens 0,1 bis 35 Gew.-% der Kunststoffmatrix (12) beträgt.

6. Halbzeug (10) nach einem der vorherigen Ansprüche, wobei die Naturfasern (22) der Gewebestruktur (14) ausgewählt sind aus Flachsfasern und/oder Jutefasern und/oder Hanffasern.

7. Halbzeug (10) nach einem der vorherigen Ansprüche, wobei die Kunstfasern der Gewebestruktur (14) Glasfasern (20) sind.

8. Halbzeug (10) nach einem der vorherigen Ansprüche, wobei das zumindest eine Polypropylen mittels zumindest eines Additivmaterials in Form von internen Trennmitteln und/oder Gleitmitteln sowie Haftvermittler angepasst ist.

## Claims

1. Multi-material semi-finished product (10) for load-bearing structural components, in particular for use in the automotive industry, said product comprising at least one fabric structure (14) and a plastics matrix (12) surrounding the fabric structure (14), the fabric structure (14) being made of a combination of synthetic fibers and natural fibers (22), **characterized in that** a natural fiber (22) is arranged between at least two synthetic fibers, the fabric structure (14) being at least partially based on a bidirectional fabric structure which has a 3/3 basket weave, and warp threads and weft threads being crossed orthogonally to one another in the bidirectional fabric structure, the natural fibers (22) being arranged as an intertwined staple yarn in the center between outer glass fiber filaments in each case.

2. Semi-finished product (10) according to claim 1, wherein the plastics matrix (12) comprises at least one low-viscosity thermoplastic material.

3. Semi-finished product (10) according to either of the preceding claims, wherein the plastics matrix (12) comprises at least one polypropylene, in particular a low-melting polypropylene.

4. Semi-finished product (10) according to claim 3, wherein the at least one polypropylene is an unreinforced, a glass-reinforced or a talc-reinforced polypropylene.

5. Semi-finished product (10) according to any of the preceding claims, wherein the plastics matrix (12) comprises at least one recycled polypropylene, wherein a proportion of the at least one recycled polypropylene is 0.1 to 35 wt.% of the plastics matrix (12).

6. Semi-finished product (10) according to any of the preceding claims, wherein the natural fibers (22) of the fabric structure (14) are selected from flax fibers and/or jute fibers and/or hemp fibers.

7. Semi-finished product (10) according to any of the preceding claims, wherein the synthetic fibers of the fabric structure (14) are glass fibers (20).

8. Semi-finished product (10) according to any of the preceding claims, wherein the at least one polypropylene is adapted by means of at least one additive material in the form of internal release agents and/or lubricants and adhesion promoters.

## Revendications

1. Demi-produit (10) multimatériau pour des composants structuraux porteurs, en particulier pour une utilisation dans l'industrie automobile, comprenant au moins une structure tissée (14) et une matrice en matière plastique (12) entourant la structure tissée (14), dans lequel la structure tissée (14) est fabriquée à partir d'une combinaison de fibres synthétiques et de fibres naturelles (22), **caractérisé en ce qu'**une fibre naturelle (22) est respectivement disposée entre au moins deux fibres synthétiques, dans lequel la structure tissée (14) est basée au moins partiellement sur une structure tissée bidirectionnelle comportant une armature panama 3/3 et des fils de chaîne et des fils de trame croisés orthogonalement les uns par rapport aux autres se trouvent dans la structure tissée bidirectionnelle, dans lequel les fibres naturelles (22) sont disposées sous forme de fil discontinu torsadé l'un dans l'autre respectivement au milieu entre des filaments de fibres de verre situés à l'extérieur.

2. Demi-produit (10) selon la revendication 1, dans lequel la matrice en matière plastique (12) comprend au moins un matériau thermoplastique à faible viscosité.

3. Demi-produit (10) selon l'une des revendications précédentes, dans lequel la matrice en matière plastique (12) comprend au moins un polypropylène, en particulier un polypropylène à bas point de fusion.

4. Demi-produit (10) selon la revendication 3, dans lequel l'au moins un polypropylène est un polypropylène non renforcé, un polypropylène renforcé par du verre ou un polypropylène renforcé par du talc.

5. Demi-produit (10) selon l'une des revendications précédentes, dans lequel la matrice en matière plastique (12) comprend au moins un polypropylène recyclé, dans lequel une proportion de l'au moins un polypropylène recyclé constitue 0,1 à 35 % en poids de la matrice en matière plastique (12).

6. Demi-produit (10) selon l'une des revendications précédentes, dans lequel les fibres naturelles (22) de la structure tissée (14) sont choisies parmi les fibres de lin et/ou les fibres de jute et/ou les fibres de chanvre.

7. Demi-produit (10) selon l'une des revendications précédentes, dans lequel les fibres synthétiques de la structure tissée (14) sont des fibres de verre (20).

8. Demi-produit (10) selon l'une des revendications précédentes, dans lequel l'au moins un polypropylène est adapté au moyen d'au moins un matériau additif sous la forme d'agents séparateurs et/ou agents lubrifiants internes ainsi que d'agents adhésifs.
